# EUROPÄISCHE PATENTANMELDUNG

(11) **EP 3 421 923 A1**
(43) Veröffentlichungstag der Anmeldung: **02.01.2019**
(21) Anmeldenummer: 17178306.1
(22) Anmeldetag: 28.06.2017
(51) Int. Cl.: F28G 15/02, B23Q 5/38, F16C 29/00, E01B 25/04

(54) **FÜHRUNGSPROFIL**

(71) Anmelder: OFTEC Handelsgesellschaft für Oberflächentechnik mbh, 45897 Gelsenkirchen (DE)
(72) Erfinder: Streck, Christian, 45897 Gelsenkirchen (DE)
(74) Vertreter: Thiel, Christian

(57) **Zusammenfassung**

Die Erfindung betrifft eine Führungsschiene (1) aus einem Vierkanthohlprofil mit vier Seitenflächen (2) und vier Kanten (3), entlang dessen vier Kanten jeweils eine nach außen gerichtete Rippe (4) angeordnet ist, wobei die Rippen (4) als Laufschienen zur verfahrbaren Anbringung von Laufelementen dienen, und die auf einer Seitenfläche (2) eine Vielzahl von gleichmäßig beabstandeten Eingriffselementen (5) aufweist, in die ein Zahnrad eines Antriebs eines Laufelements eingreifen kann, wobei der Querschnitt der Rippen (4) rund oder oval ist.

## Beschreibung

Die Erfindung betrifft eine Führungsschiene zur verfahrbaren Anbringung von Laufelementen, insbesondere ein spezielles Profil der Führungsschiene.

Im Stand der Technik sind Rahmenkonstruktionen mit Führungsschienen zur verfahrbaren Anbringung von Werkzeugen bekannt. Insbesondere sind solche Konstruktionen im Bereich der Reinigung von Rohrböden von Wärmetauschern bekannt. Ein entsprechendes System offenbart beispielsweise die WO 2016/014626 A1. Die dort offenbarten Führungsschienen entsprechen im Querschnitt im Wesentlichen dem Querschnitt eines quadratischen Vierkanthohlprofils an dessen vier Kanten jeweils eine nach außen gerichtete, im Wesentlichen quadratisch geformte Rippe mit gerundeten Kanten angeordnet ist, die als Laufschiene dient. Die Rippen erstrecken sich ununterbrochen entlang der vier Kanten über die gesamte Länge der Führungsschiene.

Nachteilig am Stand der Technik ist, dass die im Wesentlichen eckigen Rippen der vorbekannten Führungsschiene nicht allen Lagern, insbesondere Kugellagern und Gleitlagern, beim Verschieben und während der Bedienung einen ausreichenden Halt bieten. Zum einen ist dies auf den eher eckigen Profilquerschnitt der Rippen zurückzuführen, außerdem bieten die vorbekannten Führungsschienen mit ihren planen Seitenflächen des Vierkanthohlprofils nur einen begrenzt verfügbaren Raum zwischen Seitenfläche und Laufschiene. Ein zumindest ansatzweises Umfassen der Rippe durch ein Laufelement, beispielsweise ein Kugellager oder Gleitlager, ist so nicht möglich.

Es ist daher Aufgabe der Erfindung, Führungsschienen zur Verfügung zu stellen, deren Rippen ein Profil aufweisen, das Laufelementen, wie beispielsweise Gleitlagern und Kugellagern, einen besseren Halt ermöglicht.

Auch ist es Aufgabe der Erfindung, Führungsschienen zur Verfügung zu stellen, deren Rippen ein solches Profil aufweisen, dass Laufelemente, wie beispielsweise Gleitlagern und Kugellagern, mit einem möglichst geringen Reibungsverlust verfahrbar sind.

Ebenfalls ist es Aufgabe der Erfindung, Führungsschienen mit einem Profil zur Verfügung zu stellen, die bei möglichst geringem Materialeinsatz eine größtmögliche Stabilität aufweisen.

Gelöst wird diese Aufgabe durch eine Erfindung mit den Merkmalen des Anspruchs 1. Vorteilhafte Ausgestaltungen sind jeweils Gegenstand der abhängigen Ansprüche. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.

Eine erfindungsgemäße Führungsschiene zur verfahrbaren Anbringung von Laufelementen umfasst ein rechteckiges, bevorzugt quadratisches Vierkanthohlprofil, das im Folgenden auch als "Körper" oder "Führungsschienenkörper" bezeichnet werden kann, mit vier Seitenflächen und vier Kanten. Entlang den vier Kanten ist jeweils eine nach außen gerichtete Rippe angeordnet, wobei die Rippen als Laufschienen für die verfahrbar angebrachten Laufelemente dienen.

Die Rippen sind im Querschnitt im Wesentlichen rund, wobei als runde Form jede Form zwischen kreisförmig und oval verstanden werden kann. Bevorzugt sind im Querschnitt kreisförmige Rippen.

Runde und insbesondere kreisförmige Rippen haben den Vorteil, dass sie besser von den Laufelementen umgriffen werden können, als dies bei im Wesentlichen eckigen Rippen möglich ist.

In einer weiterhin bevorzugten Ausführungsform erweitern sich die vier Seitenflächen des Vierkanthohlprofils in ihrer Stärke von der Mittellinie hin zu den Rippen. Die Erweiterung betrifft im Wesentlichen die Außenseiten der Seitenflächen. Die Erweiterung kann von den Rippen aus kontinuierlich und symmetrisch bis zur Mittellinie der Seitenflächen verlaufen, jedoch sind Ausführungsformen denkbar, bei denen die Erweiterung nicht kontinuierlich und/oder nicht symmetrisch zur Mittellinie verläuft.

Es sind Ausführungsformen denkbar, bei denen sich die Seitenflächen in ihrer Stärke ausgehend von der Mittellinie hin zu den Rippen nur in einem bestimmten Abschnitt, beispielsweise im ersten Drittel oder ersten Viertel oder in einem sonstigen Teilbereich, erweitern. Entsprechend können die Seitenflächen in ihrem Mittelbereich, insbesondere um die Mittellinie herum, einen Bereich gleicher Stärke aufweisen.

Die Erweiterung der Seitenflächen führt zu einer im Querschnitt nach außen hin konkaven Form der Seitenflächen des Vierkanthohlprofils. Bevorzugt sind Ausführungsformen, bei denen die Erweiterung achsensymmetrisch zur Mittellinie verläuft. Es sind jedoch aufgrund von speziellen Anforderungen an die Führungsschiene und ihrer Belastung auch Ausführungsformen mit asymmetrischen Verläufen denkbar. Auch ist es denkbar, dass die Seitenflächen eine durchgängig gleichbleibende Stärke aufweisen.

An zumindest einer Seitenfläche des Vierkanthohlprofils befinden sich bei einer weiterhin bevorzugten Ausführungsform Eingriffselemente, die beispielsweise den Eingriff der Zähne eines Zahnrads ermöglichen und so als Zahnstangenprofil dienen.

Die Eingriffselemente können durchgängig sein, also das Material der Seitenfläche im Bereich des Eingriffselements vollständig durchbrechen, oder die Eingriffselemente können lediglich eine Einkerbung bilden, das Material also nicht durchbrechen und kein Loch bilden. Bevorzugt ist die Ausführung mit vollständiger Durchbrechung der Seitenfläche.

Die Eingriffselemente sind im Querschnitt bevorzugt superelliptisch, jedoch sind auch ovale, rechteckige oder sonstige Formen denkbar. Sonstige Ausformungen der Eingriffselemente sind denkbar, sofern eine spezielle Konstruktion dieses erfordert.

Die Eingriffselemente verjüngen sich bevorzugt insgesamt zur Mitte des Vierkanthohlprofils hin, wobei die beiden Schenkel der Eingriffselemente im Längsschnitt senkrecht zur Seitenfläche des Körpers einen Winkel von 20° bis 60° und insbesondere von 40° bilden. Es sind jedoch auch Ausführungsformen denkbar, bei denen sich die Eingriffselemente nicht oder nur in bestimmten Abschnitten verjüngen, bezogen auf die Mittelachse des Vierkanthohlprofils.

In einer bevorzugten Ausführungsform umfasst die das Hohlprofil auf zumindest einer Seitenfläche eine längs verlaufende, den mittleren Bereich erfassende Eintiefung. Diese Eintiefung führt zu einer erhöhten Steifigkeit der Führungsschiene.

Bevorzugt ist die Eintiefung auf der Seitenfläche angeordnet, die gegenüber der die Eingriffselemente aufweisenden Seitenfläche angeordnet ist. Die Eintiefung kann optional mit einem Zahnstangenprofil versehen sein.

In einer bevorzugten Ausführungsform sind die Führungsschiene und die Rippen in einem Stück gefertigt.

Die erfindungsgemäße Führungsschiene weist gegenüber dem Stand der Technik den Vorteil auf, dass das runde Profil der Laufschiene Laufelementen, wie beispielsweise Schlitten, Gleitern, Rollen und Kugellagern, einen besseren Halt sowie insgesamt eine reibungsärmere Verfahrbarkeit ermöglicht. Ein weiterer Vorteil ist, dass durch die konkave Form der Seitenflächen des Hohlprofils ein besserer Umgriff der Laufelemente möglich ist. Die konkave Form der Seitenflächen spart zudem Material ein.

Die erfindungsgemäße Führungsschiene ist insbesondere für die Verwendung im zwei- und dreidimensionalen Gerüstbau geeignet. Entsprechende Gerüste können bei den verschiedensten Anwendungen eingesetzt werden, insbesondere dann, wenn Laufelemente oder Geräte verfahrbar angebracht werden sollen. Mögliche Einsatzgebiete sind neben der bereits angesprochenen Reinigung von Rohrböden und Rohren von Wärmeaustauschern grundsätzliche auch alle weiteren Bereiche der Oberflächenbehandlung, wie beispielsweise die Boden- und Rohrreinigung.

Entsprechende Gerüste werden zudem auch im Rückbau und in der Sanierung von Bauten, insbesondere von Industrieanlagen, Kraftwerken, auch Atomkraftwerken, eingesetzt, um beispielsweise Betonfräsen, Hoch- und Ultrahochdruck-Fluidstrahler oder sonstige Montage- und Demontagewerkzeuge verfahrbar anbringen zu können. Mit den genannten Werkzeugen sind beispielsweise Sanierung, Abbau und Rückbau von selbst mit heiklen Stoffen, wie Asbest oder radioaktivem Material, belasteten Strukturen möglich.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen. Die Erfindung ist jedoch nicht auf die gezeigte Ausführungsvariante beschränkt. Insbesondere umfasst die Erfindung, soweit es technisch sinnvoll ist, beliebige Kombinationen der technischen Merkmale, die in den Ansprüchen aufgeführt oder in der Beschreibung als erfindungsrelevant beschrieben sind.

Es zeigen:
- Fig. 1: einen Querschnitt einer erfindungsgemäßen Führungsschiene.
- Fig. 2: die Aufsicht einer erfindungsgemäßen Führungsschiene.

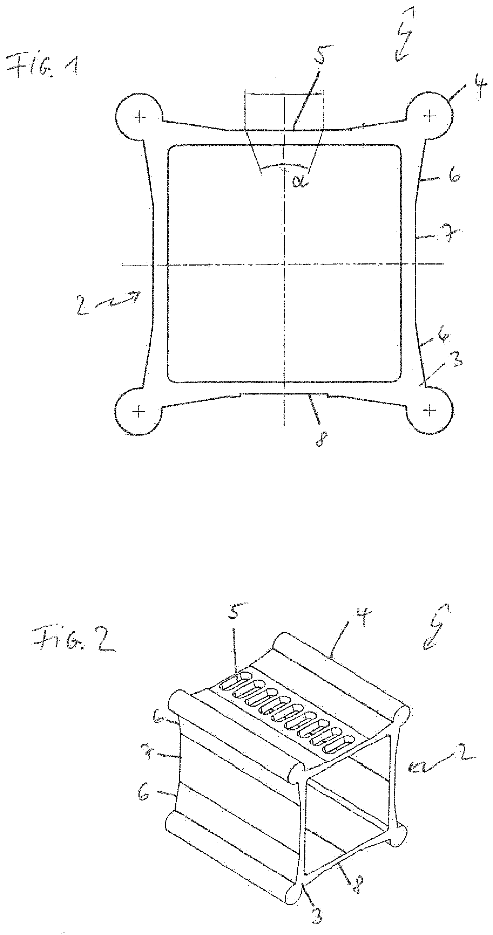

Figur 1 zeigt einen Querschnitt durch eine erfindungsgemäße Führungsschiene 1. Die Führungsschiene 1 umfasst vier Seitenflächen 2 mit vier Kanten 3, wobei sich die Kanten 3 nach außen hin zu jeweils einer Rippe 4 erweitern. Die Rippen 4 sind in der hier dargestellten bevorzugten Ausführungsform kreisrund, sie können jedoch auch oval sein. Die Seitenflächen 2 erweitern sich in einer bevorzugten Ausführungsform in ihrer Stärke zu den Rippen 4 hin. Die Seitenflächen 2 können sich von der Mittellinie aus zu den Rippen 4 hin kontinuierlich und zur Mittellinie hin symmetrisch erweitern. In einer bevorzugten Ausführungsform umfassen die Seitenflächen einen mittleren Bereich gleicher Stärke 7 und erweitern 6 sich dann anschließend zu den Rippen 4 hin.

Zumindest eine Seitenfläche 2 umfasst eine Vielzahl von gleichmäßig beabstandeten Eingriffselementen 5, in die ein Zahnrad eines Antriebs eines Laufelements eingreifen kann. Die Eingriffselemente 5 verjüngen sich insgesamt zur Mitte des Hohlprofils hin, wobei die beiden Schenkel der Eingriffselemente 5 im Längsschnitt einen Winkel α von 20° bis 60°, insbesondere von etwa 40° bezogen auf die Mittelachse des Hohlprofils bilden.

Zumindest eine Seitenfläche 2 weist eine längs verlaufende, den mittleren Bereich 7 erfassende Eintiefung 8 auf. Die Eintiefung 8 liegt bevorzugt in der Seitenfläche 2, die der Seitenfläche 2 mit den Eingriffselementen 5 gegenüberliegt.

Figur 2 zeigt eine Aufsicht auf die erfindungsgemäße Führungsschiene 1. Die Eingriffselemente 5 sind bevorzugt in gleichbleibenden Abständen angeordnet und bilden so ein Zahnstangenprofil. Die zumindest eine Seitenfläche 2, die eine längs verlaufende, den mittleren Bereich 7 erfassende Eintiefung 8 aufweist, liegt bevorzugt in der Seitenfläche 2, die der Seitenfläche 2 mit den Eingriffselementen 5 gegenüberliegt. Die Rippen 4 sind in der hier dargestellten bevorzugten Ausführungsform kreisrund, sie können jedoch auch oval sein. Die Seitenflächen 2 erweitern sich in einer bevorzugten Ausführungsform in ihrer Stärke zu den Rippen 4 hin. Die Seitenflächen 2 können sich von der Mittellinie aus zu den Rippen 4 hin kontinuierlich und zur Mittellinie hin symmetrisch erweitern. In einer bevorzugten Ausführungsform umfassen die Seitenflächen einen mittleren Bereich gleicher Stärke 7 und erweitern 6 sich dann anschließend zu den Rippen 4 hin.

### Bezugszeichenliste

- 1: Führungsschiene
- 2: Seitenfläche
- 3: Kante
- 4: Rippe
- 5: Eingriffselement
- 6: Erweiterung
- 7: Bereich gleicher Stärke
- 8: Eintiefung

## Patentansprüche

1. Führungsschiene (1) aus einem Vierkanthohlprofil mit vier Seitenflächen (2) und vier Kanten (3), entlang dessen vier Kanten jeweils eine nach außen gerichtete Rippe (4) angeordnet ist, wobei die Rippen (4) als Laufschienen zur verfahrbaren Anbringung von Laufelementen dienen, und die auf einer Seitenfläche (2) eine Vielzahl von gleichmäßig beabstandeten Eingriffselementen (5) aufweist, in die ein Zahnrad eines Antriebs eines Laufelements eingreifen kann, **dadurch gekennzeichnet, dass** der Querschnitt der Rippen (4) rund oder oval ist.

2. Führungsschiene (1) nach Anspruch 1, **dadurch gekennzeichnet, dass** der Querschnitt der Rippen (4) kreisförmig ist.

3. Führungsschiene (1) nach Anspruch 1 oder 2, **dadurch gekennzeichnet, dass** sich die vier Seitenflächen (2) des Hohlprofils zu den Rippen (4) hin in ihrer Stärke erweitern (6).

4. Führungsschiene (1) nach Anspruch 3, **dadurch gekennzeichnet, dass** die Seitenflächen (2) in ihrem Mittelbereich einen Bereich gleicher Stärke (7) aufweisen.

5. Führungsschiene (1) nach einem der vorherigen Ansprüche, **dadurch gekennzeichnet, dass** die Zunahme der Stärke (6) der Seitenflächen (2) zu den Rippen (4) kontinuierlich und achsensymmetrisch verläuft.

6. Führungsschiene (1) nach einem der vorherigen Ansprüche, **dadurch gekennzeichnet, dass** das Hohlprofil zumindest an einer Seitenfläche (2) Eingriffselemente (5) umfasst.

7. Führungsschiene (1) nach Anspruch 6, **dadurch gekennzeichnet, dass** die Eingriffselemente (5) durchgängig sind, also das Material der Seitenfläche (2) im Bereich des Eingriffselements (5) vollständig durchbrochen ist.

8. Führungsschiene (1) nach Anspruch 6 oder 7, **dadurch gekennzeichnet, dass** die Eingriffselemente (5) superelliptisch geformt sind.

9. Führungsschiene (1) nach einem der Ansprüche 6 bis 8, **dadurch gekennzeichnet, dass** die Eingriffselemente (5) sich insgesamt zur Mitte des Hohlprofils hin verjüngen, wobei die beiden Schenkel der Eingriffselemente (5) im Längsschnitt einen Winkel (α) von 20° bis 60°, insbesondere von etwa 40° bilden, auf die Mittelachse des Hohlprofils bezogen.

10. Führungsschiene (1) nach einem der vorherigen Ansprüche, **dadurch gekennzeichnet, dass** das Hohlprofil auf einer Seitenfläche (2) eine längs verlaufende, den mittleren Bereich erfassende Eintiefung (8) aufweist.

11. Führungsschiene (1) nach Anspruch 10, **dadurch gekennzeichnet, dass** die Eintiefung (8) auf zu der die Eingriffselemente (5) aufweisenden Seitenfläche (2) gegenüberliegenden Seitenfläche (2) angeordnet ist.

12. Führungsschiene (1) nach Anspruch 10 oder 11, **dadurch gekennzeichnet, dass** die Eintiefung (8) mit einem Zahnstangenprofil versehen ist.

13. Führungsschiene (1) nach einem der vorherigen Ansprüche, **dadurch gekennzeichnet, dass** das Hohlprofil und die Rippen (4) in einem Stück gefertigt sind.

14. Verwendung einer Führungsschiene (1) nach einem der Ansprüche 1 bis 13 im zwei- und dreidimensionalen Gerüstbau.

15. Verwendung einer Führungsschiene (1) nach einem der Ansprüche 1 bis 13 zur verfahrbaren Anbringung von Geräten zur Oberflächenbehandlung.

16. Verwendung nach einem der Ansprüche 14 oder 15 bei der Sanierung und dem Rückbau von Bauten.
